# EUROPEAN PATENT SPECIFICATION

(11) **EP 0 371 455 B1**
(45) Date of publication and mention of the grant of the patent: **12.10.1994**
(21) Application number: 89121932.1
(22) Date of filing: 28.11.1989
(51) Int. Cl.: H01R 4/72, B23K 3/04

(54) **Method of joining a plurality of associated pairs of electrical conductors**
Verfahren zum paarweisen Verbinden mehrerer elektrischer Leiter
Procédé pour joindre plusieurs conducteurs électriques par paires

(30) Priority: 21.12.1988 US 287766; 29.11.1988 US 277094
(43) Date of publication of application: 06.06.1990
(73) Proprietor: THE WHITAKER CORPORATION, Wilmington, Delaware 19808 (US)
(72) Inventor: Beinhaur, Ernest Lloyd, Harrisburg Pennsylvania 17112 (US); Henschen, Homer Ernst, Carlisle Pennsylvania 17013 (US); McKee, Michael John, New Cumberland Pennsylvania 17070 (US); Pawlikowski, Joseph Michael, Lancaster Pennsylvania 17601 (US)
(74) Representative: Klunker . Schmitt-Nilson . Hirsch

(56) References cited:
- EP-A- 0 203 811
- WO-A-84/02098
- US-A- 3 491 426
- US-A- 4 659 912

## Description

The present invention relates to the field of electrical connectors and more particularly to a method of joining associated pairs of first and second conductor means according to the preamble of claim 1.

Electrical connectors are known which have a plurality of terminals disposed in a dielectric housing and which are to be terminated to a respective plurality of conductor wires. In one such connector the terminals are disposed in a single row within a housing molded thereover and extend rearwardly from the housing, to conclude in termination sections comprising shallow channels termed solder tails. The housing may include cylindrical portions extending rearwardly to surround the terminals forwardly of the solder tails. When the conductor wires are prepared to be terminated to the solder tails, individual sleeve-like solder preforms encased within respective longer sleeves of heat recoverable or heat shrink tubing are placed over the rearwardly extending terminal portions so that the solder preforms surround the solder tails, or a strip of such units appropriately spaced apart; the stripped wire ends are then inserted into the heat recoverable tubing sleeves and into the solder preforms surrounding the solder tails; the entire assembly is then placed in a conventional thermal energy source and heated by convection, with the heat energy penetrating through the heat recoverable tubing to melt the solder which then flows around the stripped wire ends within the solder tails and upon cooling forms respective solder joints joining the conductor wires to the terminals; and simultaneously the heat recoverable tubing is heated above a threshold temperature at which the tubing shrinks in diameter until it lies adjacent and tightly against surfaces of the solder tails and the wire termination therewithin, a portion of the insulated conductor wire extending rearwardly therefrom, and a portion of the terminal extending forwardly therefrom to the rearward housing surface, sealing the exposed metal surfaces. Apparatus for wire and sleeve handling with respect to such a connector is known such as from US-A-3,945,114. Within forward and rearward ends of the tubing are located short sleeve-like preforms of fusible sealant material which will shrink and also tackify upon heating to bond and seal either to the insulation of the wire or to the cylindrical housing portions, whichever is therewithin, and to bond to the surrounding heat recoverable tubing. Examples of such assemblies of heat recoverable tubing lengths with solder preforms and sealant preforms therein are disclosed US-A-3,525,799; 4,341,921 and 4,595,724 and in EP-A-0 203 811.

Conventional thermal energy sources achieve a temperature in excess of a control temperature, which is chosen to be somewhat above the ideal temperature at which a particular solder material melts in order to compensate for less than ideal thermal energy transfer. Several disadvantages attend such a thermal energy delivery method: portions of the connector other than connection sites are subjected to substantial heat which may be detrimental to the connector material; the thermal energy applied to connector portions other than the connection sites is wasted; components possibly may be damaged because of general overheating, and some sites may achieve a temperature much higher than necessary in order to assure that other sites achieve a sufficient solder melting temperature; the thermal energy source either requires a long warm-up period which is wasteful of time, or remains heated at its steady state temperature which is wasteful of energy; and maintenance of a continuous and accurate control over temperature and time is an ideal desire requiring a diligence and responsive apparatus not consistently met or found in practice. Another disadvantage is that heat recoverable tubing which is initially made transparent and is desired to remain transparent to allow visual inspection of the solder joint after termination, commonly receives enough excess thermal energy to opaquify, at least obscuring the solder joint therewithin.

It is known in the prior art to utilize a self-regulating temperature source which when energized by a constant amplitude, high frequency alternating current passing therethrough, generates thermal energy and achieves a resulting constant temperature. Such a temperature can be selected to be just higher than the ideal temperature at which solder melts. The self-regulating temperature source is disclosed in US-A-4,256,945; 4,623,401; 4,659,912; 4,695,713; 4,701,587; 4,717,814; 4,745,264; WO-A-84/02098 and EP-A-0 241 597, which are expressly incorporated herein by reference. The self-regulating temperature source employs a substrate of copper or copper alloy or other conductive material of low electrical resistivity, negligible magnetic permeability and high thermal conductivity; deposited on one surface thereof is a thin layer of thermally conductive magnetic material such as iron, nickel or a nickel-iron alloy having a much higher electrical resistance and magnetic permeability than the substrate material.

When a radio frequency current for example is passed through such a two-layer structure, the current initially is concentrated in the thin high resistance magnetic material layer which causes heating; when the temperature in the magnetic material layer reaches its Curie temperature, it is known that the magnetic permeability of the layer decreases dramatically; the current density profile then expands into the non-magnetic substrate of low resistivity. The thermal energy is then transmitted by conduction to adjacent structure such as wires and solder which act as thermal sinks; since the temperature at thermal sink locations does not rise to the magnetic material's Curie temperature as quickly as at non-sink locations, the current remains concentrated in those portions of the magnetic material layer adjacent the thermal sink locations and is distributed in the low resistance substrate at non-sink locations. It is known that for a given frequency the self-regulating temperature source achieves and maintains a certain maximum temperature dependent on the particular magnetic material.

The conductive substrate can be copper having a magnetic permeability of about one and a resistivity of about 1.72 micro-ohms per centimeter. The magnetic material may be for example a clad coating of nickel-iron alloy such as Alloy No. 42 (forty-two percent nickel, fifty-eight percent iron) or Alloy No. 42-6 (forty-two percent nickel, fifty-two percent iron, six percent chromium). Typical magnetic permeabilities for the magnetic layer range from fifty to about one thousand, and electrical resistivities normally range from twenty to ninety micro-ohms per centimeter as compared to 1.72 for copper; the magnetic material layer can have a Curie temperature selected to be from the range of between 200°C to 500°C. The thickness of the magnetic material layer is typically one skin depth; the skin depth is proportional to the square root of the resistivity of the magnetic material, and is inversely proportional to the square root of the product of the magnetic permeability of the magnetic material and the frequency of the alternating current passing through the two-layer structure.

US-A-4,659,912 as mentioned above discloses a thin, flexible, autoregulating strap heater comprising a thin member of copper with a layer of magnetic material disposed on a flat surface of the copper. The heater is disposed on a surface of a thin paper-like substance with a sticky substance being provided between the heater and the paper-like substance. Electrodes of an energizing circuit are disposed on an opposite surface of the paper-like substance. This heater is primarily for use in soldering to shielding braids of electrical cables. It is designed to leave material deposits of magnetic material and copper or epoxy and adhesive , and thus create permanent fixtures.

The above-mentioned WO-A 84/02098 discloses an autoregulating heater consisting of a copper sleeve for crimping and soldering to each other two conductive wires inserted in the copper sleeve, and two semi-cylindrical jaws being made of magnetic material. If the sleeve is to be used in a non-electrical system, the jaws are provided with inner linings of copper. This type of heater is for single terminations only.

It is desired to obtain solder joints of a plurality of terminating sections of an electrical multiterminal connector without heating all portion of the connector.

It is desired to consistently obtain assured solder joints in a multiterminal connector having prehoused terminals.

The present invention provides a method of joining associated pairs of first and second conductor means as defined in claim 1. Embodiments of the invention are defined in the dependent claims.

The present invention employs self-regulating temperature source technology to terminate conductor wires to termination sections of terminals, to splice pairs of conductor wires or to terminate a plurality of conductor wires to respective terminals of an electrical connector. A stripped wire end is placed along a solder tail of a terminal; a sleeve-like solder preform containing flux is placed around the wire end and solder tail; a length of heat recoverable tubing is placed around the solder preform and extends axially to opposed tubing ends around the insulated wire portion and an insulated terminal portion; sealant preforms are placed within the opposed tubing ends and around the insulated wire portion and insulated terminal portion; a heater means having a first layer of conductive nonmagnetic metal and a second layer of high resistance magnetic material is placed around the heat recoverable tubing length; a high frequency alternating current is induced in or transmitted to the heater means which then generates thermal energy; and the thermal energy is transmitted to the tubing and the solder and sealant preforms, melting the solder to terminate the wire to the terminal and melting and tackifying the sealant preforms to bond to the insulated wire and terminal portions and shrinking the tubing, thus forming a termination and sealing it simultaneously.

In one arrangement utilizing the method of the present invention, a terminal subassembly is formed by placing a plurality of terminals in a dielectric housing, such as by molding dielectric material around body sections of the terminals, and contact sections of the terminals are exposed along a mating face of the housing for eventual mating with corresponding contact sections of another connector. Termination sections of the terminals extend rearwardly from the housing to be terminated to individual conductor wires, and comprise preferably shallow channels. The terminals may be made of a copper alloy such as brass, phosphor bronze or beryllium copper for example.

Sleeve-like preforms of solder with flux are placed around the termination sections, with lengths of heat recoverable tubing around the solder preforms and extending forwardly over cylindrical housing flanges covering the terminals forwardly of the terminating sections, to the rear surface of the housing, and rearwardly a distance beyond the ends of the termination sections. Stripped ends of conductor wires are placed along the respective channels and within the solder preforms, and a portion of the insulated wire extends into the rearward end of the heat recoverable tubing lengths. Sleeve-like preforms of sealant material may be disposed within the forward and rearward tubing sections to melt and shrink, tackify and bond to the housing flanges and wire insulation respectively, and bond to the surrounding portions of heat recoverable tubing.

A heater means is then placed in position across the termination region above and below the termination sections. The heater means may be a strap wrapped around the plurality of termination sections having the heat recoverable tubing sleeves thereover containing the solder preforms. The metal strap comprises a self-regulating temperature source and includes two layers of different metals: a first layer of electrically conductive, low resistivity, low magnetic permeability metal such as copper or copper alloy; and a second layer of metal having high resistivity and high magnetic permeability such as iron, nickel or nickel-iron alloy.

A selected constant amplitude high frequency alternating current is generated by an appropriate apparatus which is transmitted to or induced in the strap. The current in the strap over a short length of time produces thermal energy which rises to a certain temperature selected to be slightly higher than needed to melt the solder preforms. The thermal energy is transmitted to the solder preforms within the lengths of heat recoverable tubing around the respective termination sections thereby melting the solder which forms solder joints between the wires and the termination sections. The thermal energy also is transmitted to and begins to melt and shrink and tackify the sealant preforms and to shrink the surrounding heat recoverable tubing which reduces to conform to the outer surfaces of the structure therewithin including the insulated wire portion, the termination sections including the terminations, the shrunken sealant preforms and the housing flanges. The terminations of the terminals to the wires are completed and the terminations and all exposed metal is sealed and the strap preferably removed, completing the connector.

The current may be transmitted to the strap by ohmic connections to two isolated ends of the strap by electrodes of the apparatus. The current also may be induced in the strap by an appropriate apparatus having a coil surrounding the strap which is disposed around the termination region transverse to the assembly, and the coil then being energized. Using induction for generating the current, the heater means may be a pair of plate members surrounded by the coil instead of being a continuous strap.

The invention provides a method for joining pairs of conductive means to each other and simultaneously sealing the joints thus formed.

The invention and/or embodiment thereof make available a method resulting in a connector having a plurality of discrete terminals terminated to conductor wires and sealed in a simple, assured, efficient and economical process.

The invention and/or embodiment thereof provide a method of soldering the wires and seal the terminations simultaneously.

The invention and/or embodiment thereof provides a method of soldering the wires to the terminals by assuredly achieving a certain selected temperature at all termination sites.

The invention and/or embodiment thereof provide the necessary elevated temperature within only the region containing the termination sites.

The invention and/or embodiment thereof use a self-regulating temperature source which minimizes the amount of excess heat received by the tubing, enhancing its ability to remain transparent, and thereby allow visual inspection of the solder joint.

The invention and/or embodiment thereof provide a method for sealing an end of a length of heat recoverable tubing using a self-regulating temperature source.

An example of the present invention will now be described with reference to the accompanying drawings, in which:
FIGURE 1 is a perspective view of a connector with which the present invention is used;
FIGURE 2 is similar to Figure 1 with a terminal subassembly of the connector exploded from the conductor wires, showing lengths of heat recoverable tubing containing solder preforms used in the assembly of the connector;
FIGURE 3 is an enlarged perspective, part section view of a sleeve assembly to be placed over a solder tail;
FIGURES 4 to 6 are enlarged perspective views of the single termination site of Figure 3 showing a termination section, sleeve assembly and wire end prior to termination, in place to be terminated by a heater strap, and terminated and sealed respectively;
FIGURES 7 and 8 are perspective views showing the terminal subassembly and wires and lengths of heat recoverable tubing having a heater strap placed therearound, with a high frequency alternating current being transmitted to and induced in the heater strap, respectively;
FIGURES 9 and 10 are cross-section views of two embodiments of the heater strap of the present invention;
FIGURES 11 and 12 show an alternate heater means comprising one plate member using an ohmic connection, or a pair of plate members in which current is induced by a surrounding coil, respectively;
FIGURE 13 is a longitudinal section view of an alternate embodiment showing splicing of ends of pairs of wires using the method of the present invention;
FIGURES 14 and 15 show additional methods of using a shapable heater strap with a splice termination array as in Figure 13 and a plurality of terminals for conductor wires as in Figure 7 respectively;
FIGURE 16 illustrates a shapable heater strap for an individual termination of a terminal to a wire; and
FIGURES 17 to 19 illustrate a shapable heater strap utilized for sealing an end of heat recoverable tubing, with a pair of spliced conductor wires extending from the other end in Figure 17 and an unused terminal in Figure 18, and Figure 19 being a cross-section of an unfilled tubing end and a heater strap therearound.

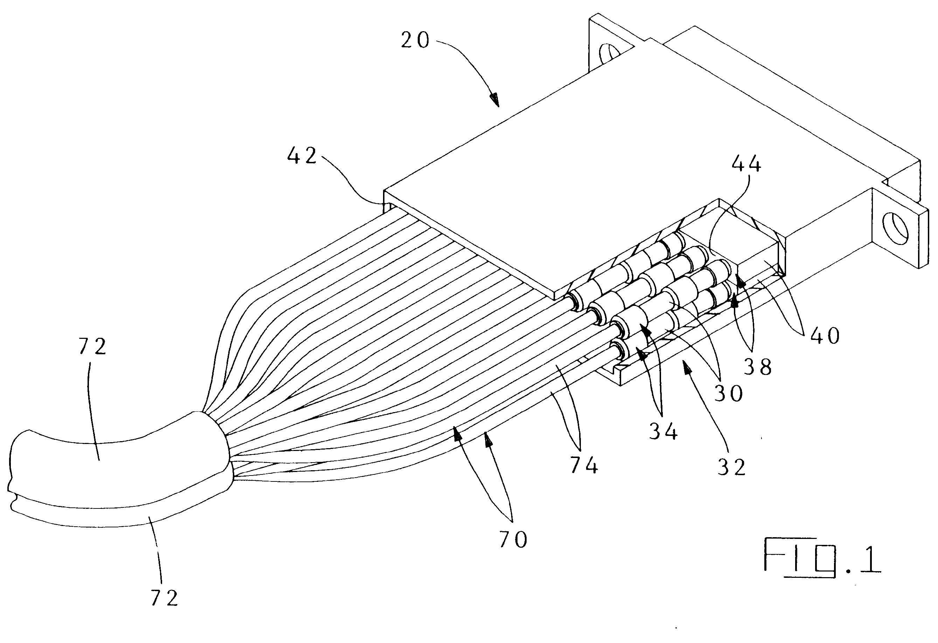

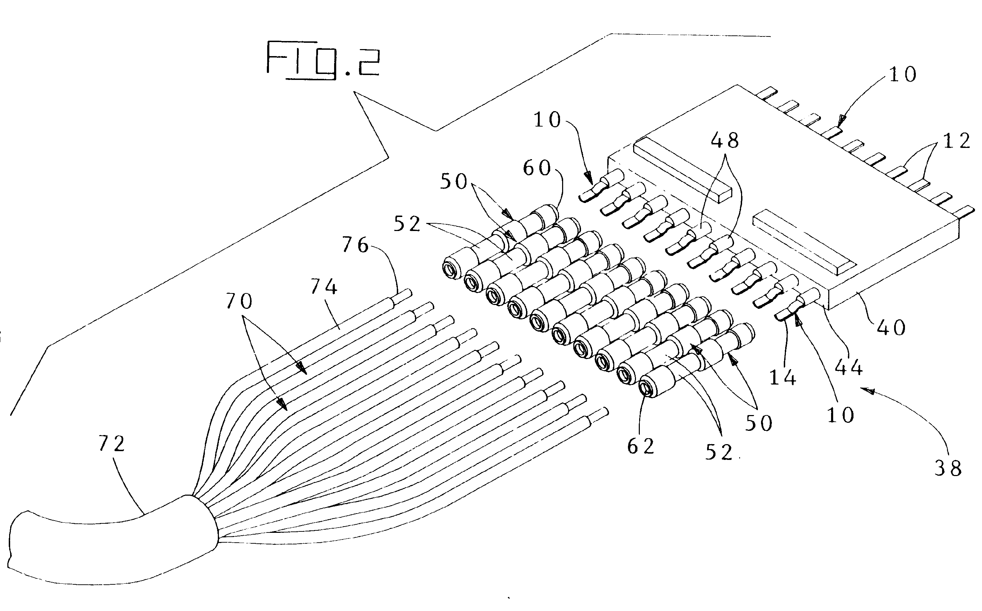

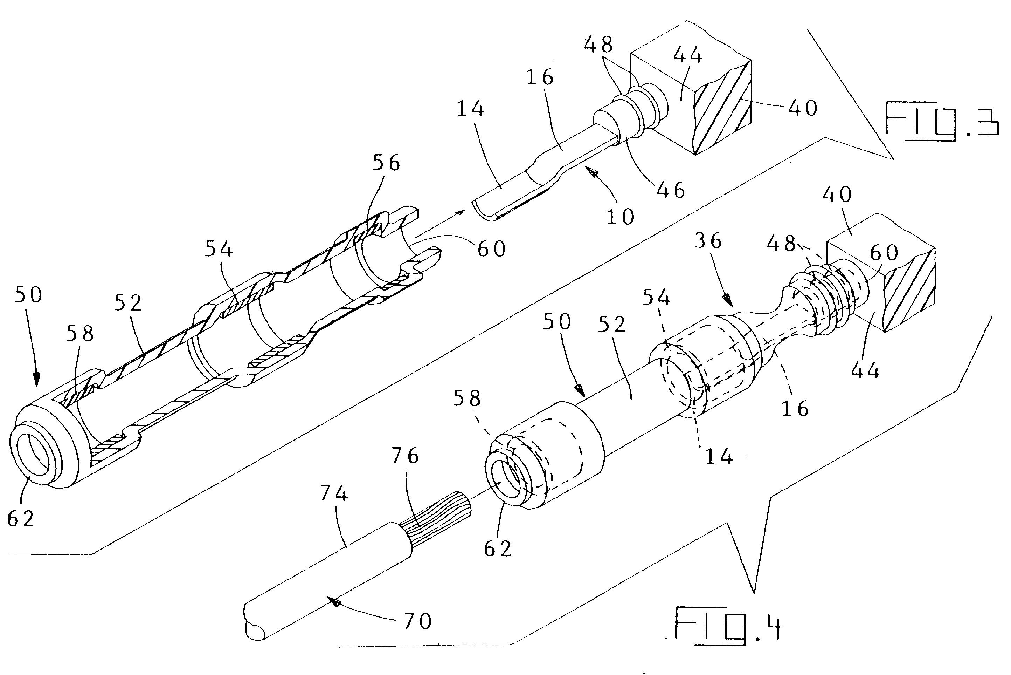

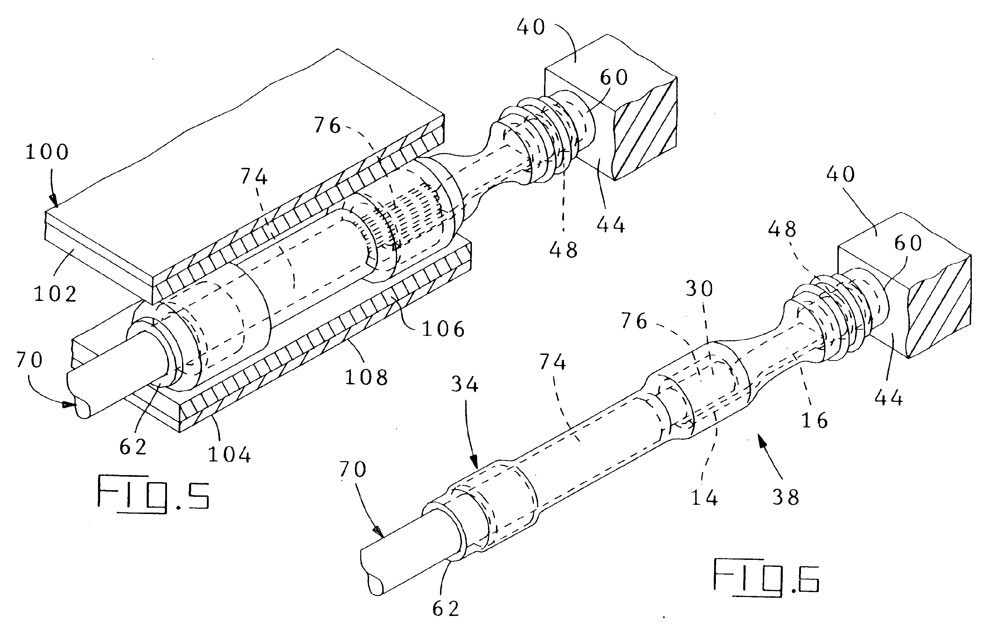

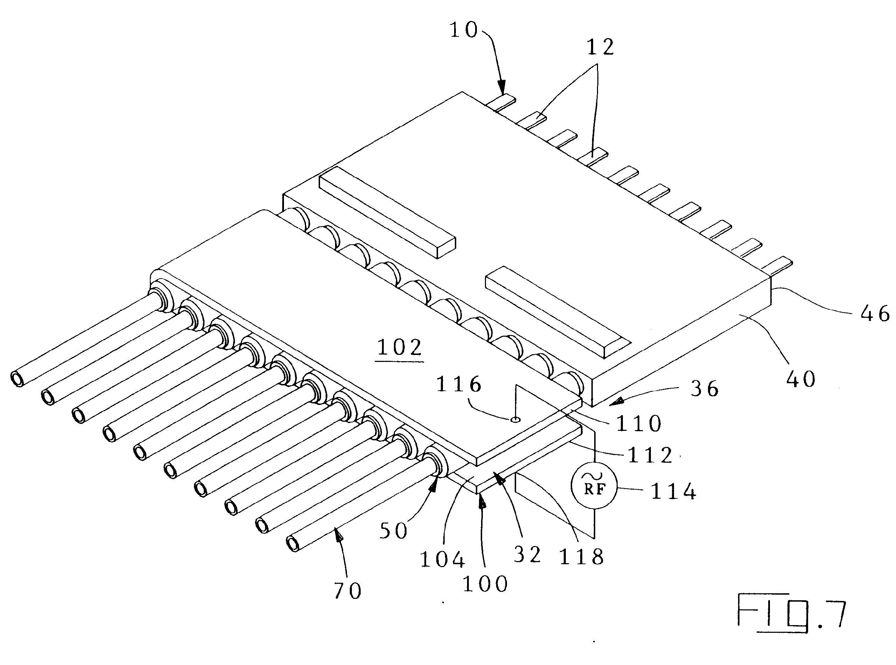

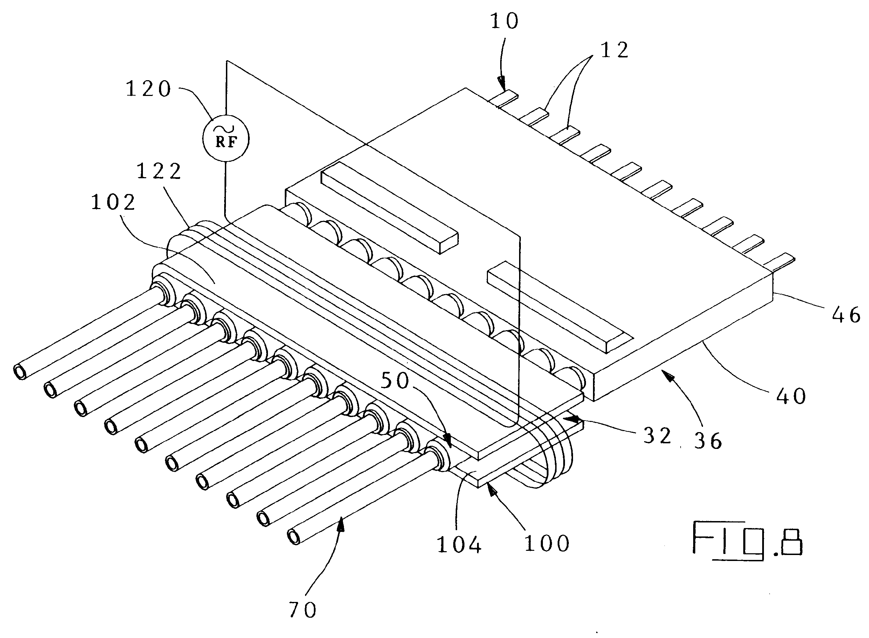

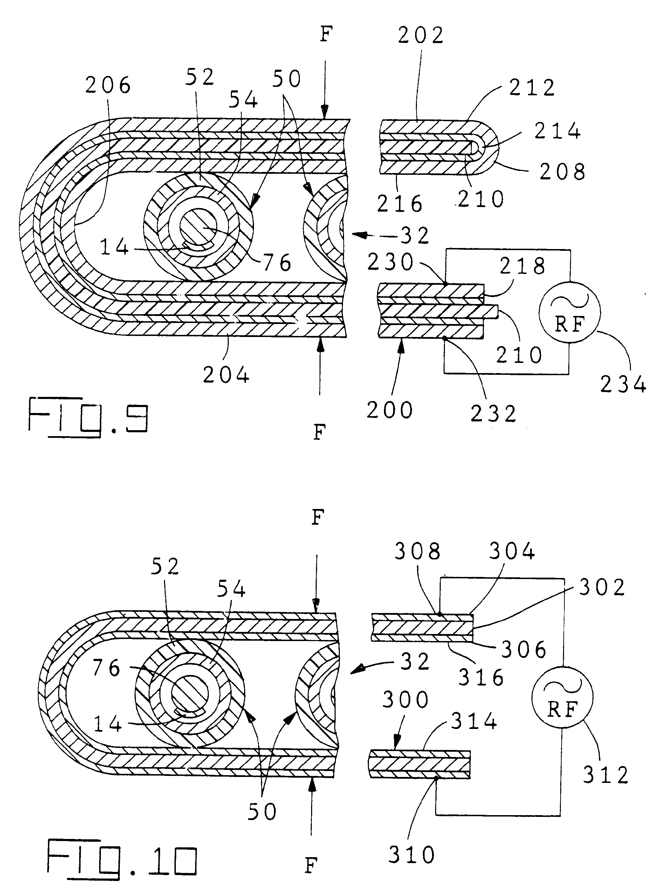

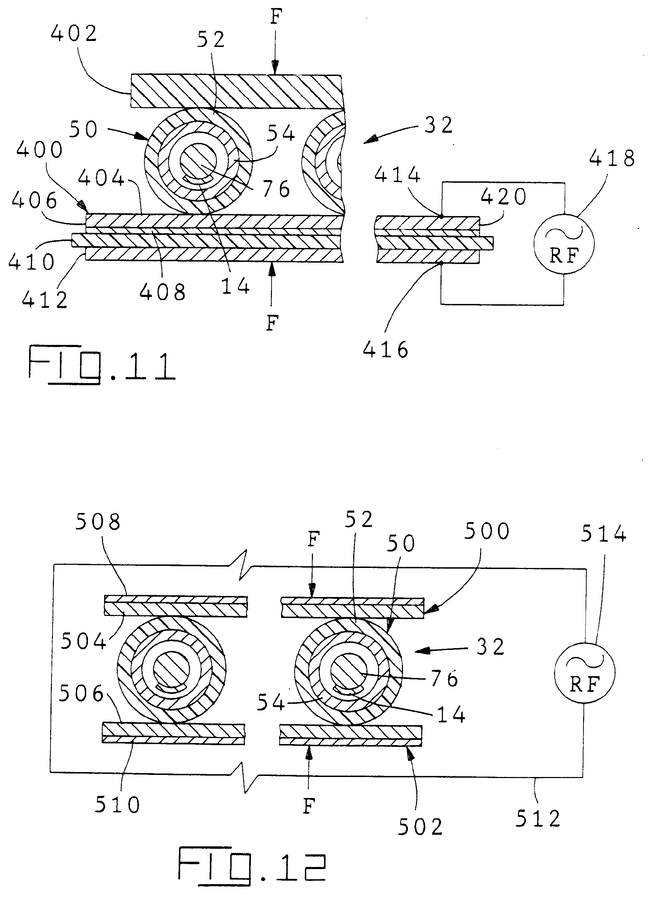

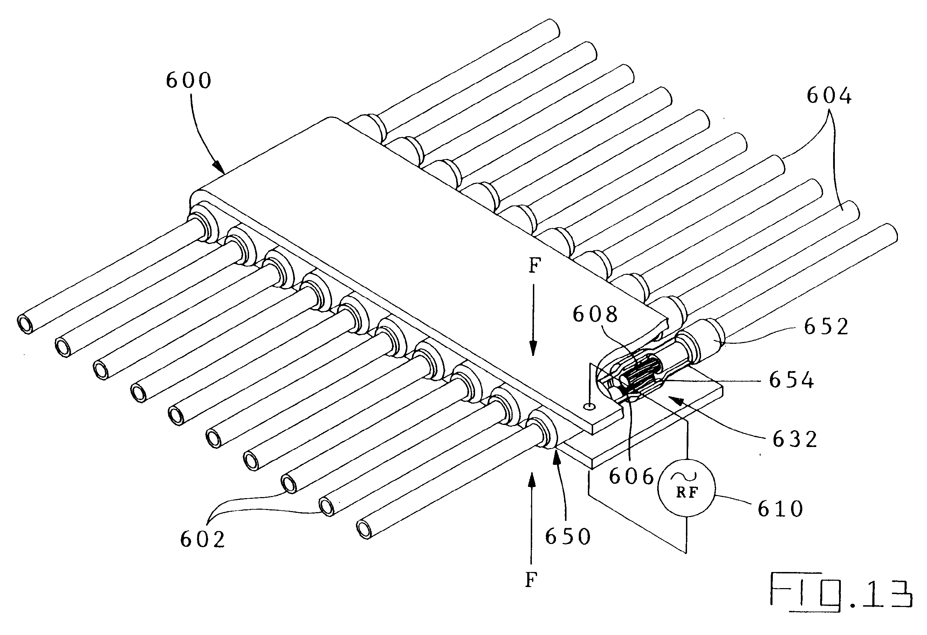

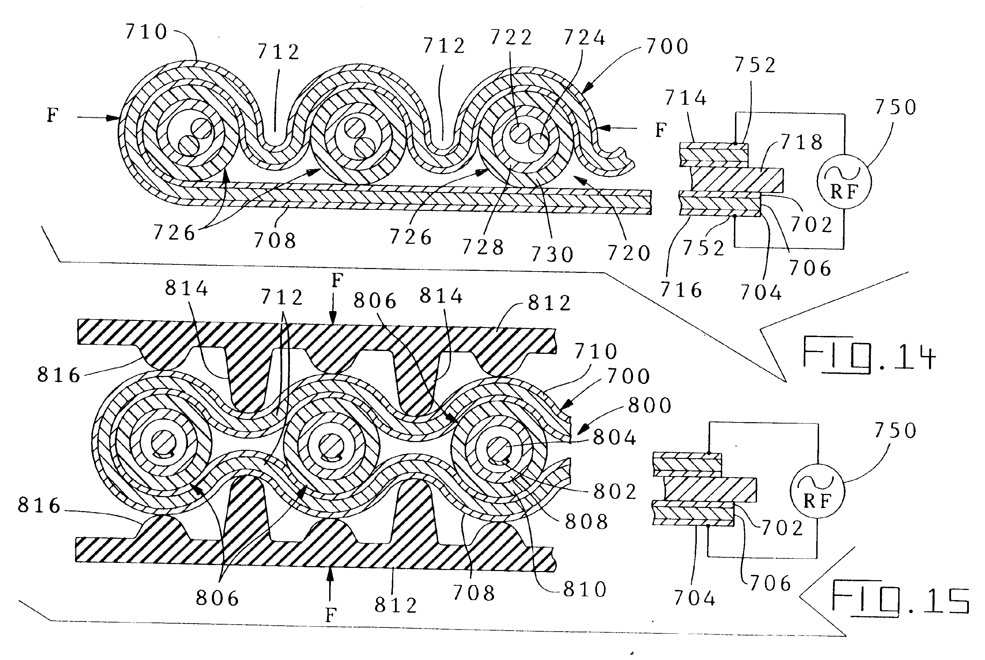

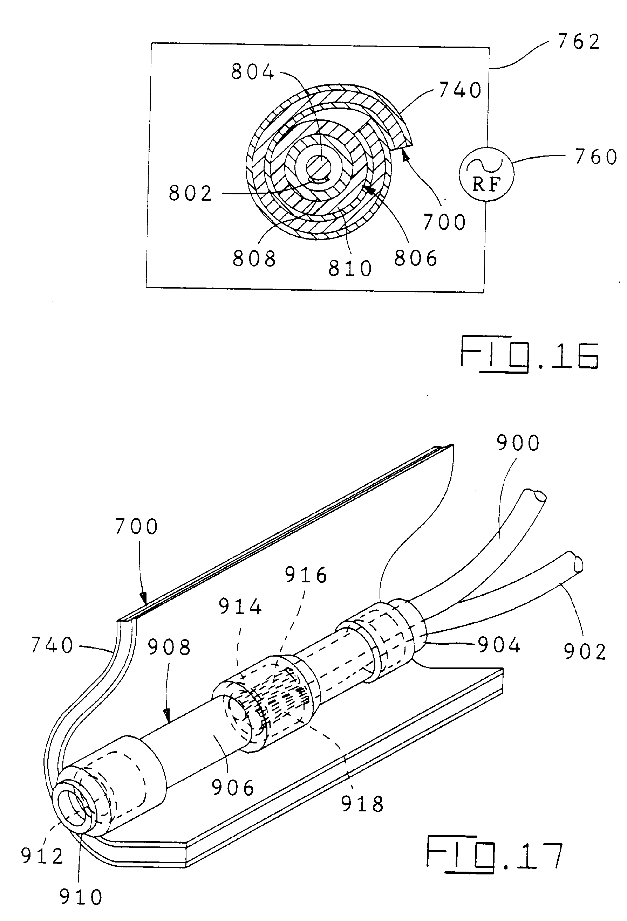

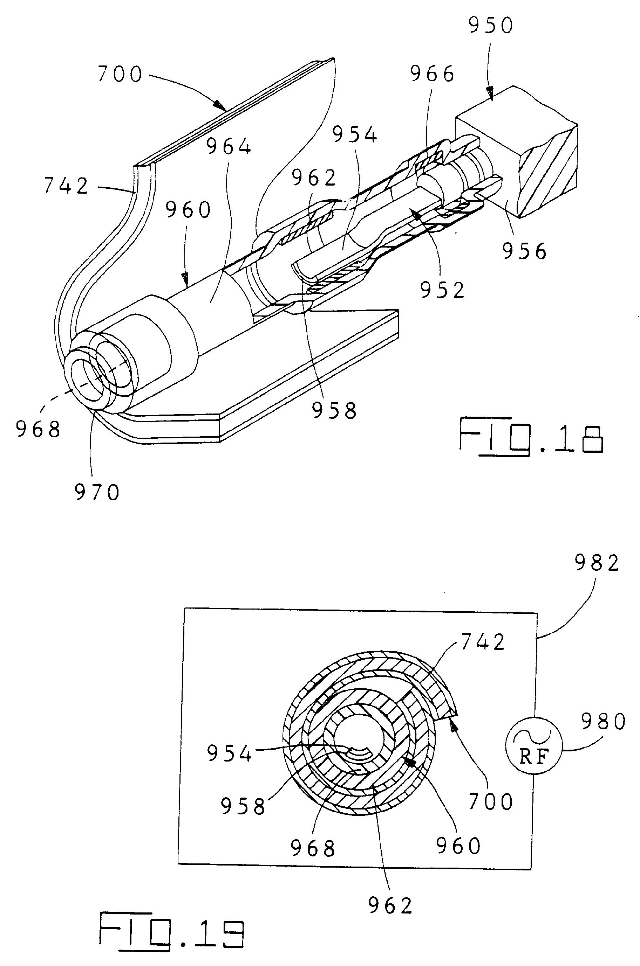

Figure 1 shows a connector 20 having a plurality of terminals 10 (Figure 2) secured within a pair of dielectric housings 40 within a shell 42. Terminals 10 are terminated at terminations 30 to a respective plurality of conductor wires 70 within a termination region 32 rearwardly of wire face 44 of housings 40. Respective blade contact sections 12 (Figure 2) of terminals 10 extend forwardly from a mating face of housings 40 to be mated eventually with corresponding contact sections of terminals of a mating connector (not shown). Conductor wires 70 have insulation material therearound and may be bundled within an outer jacket 72. The termination region 32 includes individual seals 34 formed around terminations 30 and extending from wire face 44 of each housing 40 to insulated end portions 74 of wires 70. The terminals 10 are shown disposed in single rows for a low profile module 38 for a miniature rectangular connector, although the present invention may be used with other styles of connectors and other terminal arrangements. Terminals may also be socket or receptacle-type terminals.

Referring to Figures 2 and 3, each terminal 10 includes a terminating section 14 disposed at the end of an intermediate section 16 extending rearwardly from a body section secured within housing 40. Preferably much of intermediate section 16 is embedded within a cylindrical housing portion or flange 46 extending rearwardly from wire face 44 to facilitate eventual process steps and to assure appropriate sealing. Flange 46 may include annular ribs 48 or other projections to assist eventual sealing. Terminating section 14 may have a shallow channel shape and is conventionally termed a solder tail for eventual placement of a stripped end portion 76 of a conductor wire 70. Sleeve assembly 50 associated with solder tail 14 comprises a length of heat recoverable tubing 52, which includes therewithin a solder preform 54 and preferably includes two sealant preforms 56,58 also therewithin.

Solder preform 54 preferably is formed in a sleeve shape of short length large enough to be placed over and around a respective solder tail 14 and also then to receive a stripped conductor wire end thereinto. Length 52 of preferably transparent heat recoverable tubing is formed to be placed over solder preform 54 and be sufficiently long to extend over flange 46 from wire face 44, over solder tail 14, and over insulated wire end portion 76. Solder preform 54 is placed within tubing 52 at an axial location appropriate so that when the sleeve assemblies 50 are placed over the rearwardly extending terminal portions the solder preform 54 will surround the solder tail 14. Sealant preforms 56,58 are short sleeves axially spaced to be disposed over flange 46 and the insulated wire end portion 74 respectively. The plurality of sleeve assemblies 50 for the plurality of solder tails 14 may be joined if desired by a strip of adhesive tape or the like to form a single entity for convenient handling as is conventionally known, with sleeve assemblies 50 appropriately spaced apart to correspond to the spacing of the terminals 10 secured in housing 40.

Solder preform 54 and sealant preforms 56,58 are secured within tubing 52 such as by being force-fit therewithin, or by tubing 52 being partially shrunk or reduced in diameter therearound. Solder preform 54 may be made of tin-lead solder including solder flux mixed therein or coated therearound, such as for example Sn 63 meltable at a temperature of about 183°C or Sb-5 meltable at about 240°C; sealant preforms 56,58 may comprise for example a homogeneous mixture of polyvinylidene fluoride, methacrylate polymer and antimony oxide, which will shrink in diameter at a nominal temperature selected to be about 190°C; and tubing 52 is preferably transparent and may be of cross-linked polyvinylidene fluoride and have a nominal shrinking temperature of about 175°C. Generally it would be preferable to provide a thermal energy source capable of achieving a temperature of about 50°C to 75°C above the solder melting point.

In Figure 4 leading end 60 of sleeve assembly 50 has been placed over a respective solder tail 14 and moved forwardly until leading end 60 abuts wire face 44 of housing 40, so that sealant preform 56 surrounds flange 46 and solder preform 54 surrounds solder tail 14. Optionally in a preliminary assembly step a limited amount of heat may then be applied locally to leading end 60 thereby reducing sealant preform 56 to bond to flange 46 and grip annular ribs 48 which resist axially rearward pulling on the sleeve assembly 50; tubing 52 also reduces in diameter around flange 46 and sealant preform 56. Such a preliminary assembly step allows housing 40 and the plurality of sleeve assemblies 50 to be handled as a unit, housing/sleeve assembly 36. Stripped conductor wire 76 is inserted into trailing end 62 of sleeve assembly 50 until located such as by visual observation through transparent tubing 52 completely along solder tail 14 within solder preform 54, and insulated end portion 74 is disposed within sealant preform 58. A self-regulating heater means is then placed in position at the termination region 32. Upper and lower strap portions 102,104 are seen of a strap 100 which has been placed around the solder tail 14 within the solder preform 54 and tubing length 52.

Figure 6 shows a terminated and sealed connection after the solder has been melted according to the present invention with thermal energy generated by strap 100 to form a solder joint termination 30 between wire end 76 and solder tail 14, sealant preform 58 has been shrunk in diameter to bond to insulated wire end 74, and tubing 52 has shrunk to conform to the outer surfaces of the structures therewithin, and bonds to sealant preform 58 thereby sealing the termination by tightly gripping about the insulated wire end 74 at trailing end 62 and the flange 46 at leading end 60, forming a seal 34 extending between insulated conductor 70 and housing 40.

Figures 7 and 8 illustrate terminating the wires and solder tails and sealing the terminations. A strap 100 placed around the array of solder tails 14 within the termination region 32 with a top section 102 overlying the terminating region and a bottom section 104 thereunder. A constant amplitude high frequency alternating current is generated by apparatus 114 such as a radio frequency signal at a frequency of 13.56 MHz such as by an apparatus disclosed in US-A-4,626,767. After a length of time such as about 30 seconds, the strap 100 has achieved a certain temperature determined by the particular magnetic material, which penetrates the tubing lengths and melts the solder preforms, and then shrinks the tubing lengths resulting in the sealed terminations of Figure 6.

Strap 100 of Figures 5 to 7 comprises a first layer 106 comprising a substrate of copper or copper alloy such as brass or phosphor bronze having a thickness of for example about 0.05 mm (0.002 inches). One major surface of the substrate has deposited thereon a thin layer 108 of magnetic material such as a nickel-iron alloy like Alloy No. 42 having a thickness of for example between about 0.01 mm (0.0004 inches) and about 0.015 mm (0.0006 inches). Typically a roll cladding process may be used where an amount of the magnetic material is laid over the substrate, then subjected to high pressure and temperature which diffuses the two materials together at the boundary layer, but other processes such as plating or sputter depositing could be used. A thin layer of dielectric coating material may be applied over the magnetic material to inhibit oxidation. Optionally a strap could be formed by plating a layer of nickel onto a layer of copper to a thickness preferably 1-1/2 to 2 times the skin depth of nickel at the selected current frequency.

In Figure 7 a high frequency alternating current is being transmitted by apparatus 114 to isolated ends 110,112 of heater strap 100 such as by electrodes forming a pair of ohmic connections 116,118 with the strap. In Figure 8 a high frequency alternating current is being induced by apparatus 120 in heater strap 100 by a coil 122 thereof surrounding heater strap 100 and termination region 32.

It is preferred that the inwardly facing surfaces of the heater strap be in engagement with the sleeve assemblies therewithin to transmit thermal energy to the sleeves and to the solder preforms therewithin, and the surfaces of the heater strap may also be spring loaded against the sleeve assemblies preferably by means (not shown) having good thermal insulating properties to avoid acting as thermal sinks and removing thermal energy desired for the termination region.

An example of a process using the self-regulating temperature source strap of the present invention would be: providing an apparatus capable of providing a constant amplitude high frequency alternating current having frequency such as 13.56 MHz; selecting a solder preform having tin-lead solder with flux which melts at a nominal temperature of about 183°C; selecting heat recoverable tubing shrinkable at a nominal temperature of 175°C and disposed around the solder preform; securing around the termination region a strap having a layer of brass with a thickness of about 0.05 mm (0.0020 inches) and having thereunder a thin clad layer of Alloy No. 42 having a thickness of between about 0.01 to 0.15 mm (0.0004 to 0.0006 inches) and applying an RF current at 13.56 MHz thereto for about 30 to 60 seconds. The self-regulating temperature source which comprises the strap will rise to a temperature of generally about 350°C, melt the solder, shrink the sealant preforms, and shrink the tubing. Also, if solder preforms are selected having a melting temperature of about 240°C such as Sb-5 a magnetic material may be used having a nominal Curie temperature of about 300°C to 315°C.

Figures 9 and 10 show different embodiments of heater straps. In Figure 9 strap 200 includes upper portion 202 and lower portion 204 joined at bight 206 together surrounding termination region 32 in which are disposed the sleeve assemblies 50 including heat recoverable tubing 52 surrounding respective termination sections 14 of the terminals and wire ends 76 within solder preforms 54. Strap 200 can be an elongate member which is doubled over upon itself at bend 208 with a layer 210 of plastic such as KAPTON secured between the doubled over portions. The elongate member prior to doubling over includes an outermost layer 212 of conductive nonmagnetic material such as copper to which is clad a layer 214 of magnetic material, and upon doubling over the magnetic layer 214 is adjacent the plastic layer both above and below while the now-inwardly facing surface portion 216 of copper layer 212 is adjacent the sleeve assemblies 50. The ohmic connections 230,232 are made by electrodes of apparatus 234 at strap end 218 to the inwardly facing surface portion 216 and outwardly facing surface portion 220 of copper layer 212 which are insulated by plastic layer 210 at end 218, and a high frequency alternating current is transmitted to strap 200 whereby thermal energy is generated.

In Figure 10 strap 300 has a simpler construction surrounding termination region 32. A central layer 302 of conductive nonmagnetic metal such as copper has outer layers 304,306 of magnetic material such as nickel-iron alloy clad thereto. Ohmic connections 308,310 are made by electrodes of apparatus 312 at ends 314,316 respectively to transmit a current to strap 300 whereby thermal energy is produced.

As shown in Figures 11 and 12, the heater means need not be a continuous loop in order for a current to exist therein. In Figure 11 a single heater plate 400 is shown below termination region 32, while a plate 402 of low thermal conductive material preferably urges sleeve assemblies 50 against the upper surface 404 of upper layer 406 of heater plate 400. Upper layer 406 may be conductive nonmagnetic material such as copper; an inner layer 408 of magnetic material such as Alloy No. 42 is clad thereto; an insulative layer 410 such as KAPTON plastic is disposed against magnetic layer 408; and plate 400 includes a lower layer 412 of conductive nonmagnetic material such as copper. Insulative layer 410 provides that the pair of ohmic connections 414,416 may be made by electrodes of apparatus 418 at one end 420 of the plate 400 and a current generated along the entire length of the plate.

In Figure 12 a pair of heater plate members 500,502 above and below the termination region 32 may be sufficient; a current is shown induced in both plate members 500,502 generating heat from both the upper and lower plate members. Inwardly facing layers 504,506 of both plate members may be conductive nonmagnetic material such as copper, while clad outer layers 508,510 comprise magnetic material such as Alloy No. 42. Preferably a spring force F applied by members (not shown) of low thermal conductive material urges plate members 500,502 against sleeve assemblies 50. Coil 512 of apparatus 514 induces a corresponding high frequency alternating current in plate members 500,502 so that sufficient thermal energy is believed would be provided to reflow the solder of solder preforms 54 and shrink the heat recoverable tubing 52 appropriately.

Figure 13 illustrates that strap 600 is usable to form a plurality of sealed splice terminations, splicing associated first and second conductors 602,604 of an array together, by placing stripped wire ends 606,608 of pairs of conductors to be spliced within respective sleeve assemblies 650 comprised of solder preforms 654 within lengths 652 of heat recoverable tubing; surrounding the termination region 632 with a strap 600; and generating high frequency current in the strap by apparatus 610, producing thermal energy which penetrates the heat recoverable tubing lengths, melts the solder and shrinks the tubing, splicing the conductors and sealing the splice terminations thus formed.

In Figures 14 to 19 there is shown a variety of applications of the method of the present invention, where the thin heater strap is shapable. A shapable heater strap 700 has an inwardly facing layer 702 and outwardly facing layer 704 comprising magnetic material about 0.01 to 0.15 mm (about 0.0004 to 0.0006 inches) thick, and a central layer 706 comprising conductive nonmagnetic material about 0.04 mm (about 0.0016 inches) (about 0.04 mm) thick, so that strap 700 has a total thickness of about 0.06 to 0.07 mm (about 0.0024 to 0.0028 inches), thick; strap 700 easily shaped while having the property of retaining the finally formed shape.

In Figure 14 shapable heater strap 700 is used to splice an array 720 of pairs of first and second wire ends 722,724 of conductor wires, as in Figure 13. Sleeve assemblies 726 are placed around each pair of wire ends 722,724 and each has a solder preform 728 within heat recoverable tubing 730, with sealant preforms (not shown) preferably placed at ends of the tubing 730 to seal to the conductor wire insulation. The array of sleeve assemblies 726 are placed atop a lower portion 708 of shapable heater strap 700 spaced slightly apart. An upper strap portion 710 extending from lower portion 708 is placed atop sleeve assemblies 726 adjacent outer surfaces of upper portions of heat recoverable tubing lengths 730. The sleeve assemblies 726 are then urged against each other and intermediate sections 712 of upper strap portion 710 are urged downwardly between the sleeve assemblies forming loops therebetween. The upper strap portion 710 is held against substantial surface portions of heat recoverable tubing lengths 730 for more efficient transmission of thermal energy, when strap 700 is energized by apparatus 750 such as through ohmic connections 752 engaging strap ends 714,716 insulated from each other by dielectric layer 718.

In Figure 15 shapable heater strap 700 is wrapped around a termination region 800 similar to termination region 32 of Figure 7. Solder tails 802 of respective terminals are being terminated to respective stripped wire ends 804; sleeve assemblies 806 are disposed therearound including solder preforms 808 within lengths of heat recoverable tubing 810. Shapable heater strap 700 has been wrapped around the array of sleeve assemblies 806, loosely at first, with lower strap portion 708 disposed against outer tubing surfaces defining a lower termination region portion and upper strap portion 710 disposed against outer tubing surfaces defining an upper termination region portion. A pair of elastomeric upper and lower members 812 are then pushed against outer surfaces of upper and lower heater strap portions 710,708 so that vertical ribs 814 located between sleeve assemblies 806 urge intermediate portions 712 into the area between adjacent sleeve assemblies 806, while bosses 816 urge upper and lower strap portions 710,708 directly against tubing lengths 810. This method increases the total surface area of strap 700 in engagement with outer surfaces of tubing lengths 810 for better heat conduction when strap 700 is energized by apparatus 750. Elastomeric members 812 may be made of silicone rubber for example and may be placed under slight spring force during the termination procedure to maintain surface engagement between the shapable heater strap and the sleeve assemblies.

In Figure 16 a short length 740 of shapable heater strap 700 is shown wrapped around a single sleeve assembly 806 of Figure 15, and may be energized by apparatus 760 having a coil 762 extending therearound. Short length 740 after wrapping may be slightly crimped to maintain the crimped shape to maximize surface engagement between the strap and the outer surface of tubing length 810.

In Figure 17 a pair of conductor wires 900,902 coextend from a far end 904 of tubing length 906 of sleeve assembly 908. Near end 910 of sleeve assembly 908 contains a sealant preform 912 but is otherwise open. A solder preform 914 is disposed around the stripped wire ends 916,918 of wires 900,902. A short length 740 of shapable heater strap 700 is wrapped around sleeve assembly 908 including near end 910. When energized by high frequency alternating current, strap length 740 assures that near end 910 receives thermal energy which will melt sealant preform 912 and shrink the tubing therearound, which will close near end 910 and thus seal the splice termination even though no conductor wire or other conductive means extends through near end 910.

Such a method as described with reference to Figure 17 may also be utilized as shown in Figure 18 where terminals of a connector 950 have solder tails with integral layers of magnetic material clad or plated thereto which are disclosed in EP-A-0 371 458 including the disclosure of U.S. Patent Application Serial No. 07/277,094 filed November 29,1988 the priority of which is claimed in the subject European patent application and the disclosure of which is expressly incorporated herein by reference. One terminal 952 of such terminals remains unused and is not to be terminated to a corresponding conductor wire for some reason. Terminal 952 has a sleeve assembly 960 therearound having a solder preform 962 around solder tail 954 thereof, and a length of heat recoverable tubing 964 with sealant preforms 966,968 at both ends, sealant preform 966 being adjacent connector housing 956. Solder tail 954 has an outwardly facing layer 958 of magnetic material which will still generate thermal energy to reflow the solder of the solder preform 962 when energized with an induced high frequency alternating current, and will shrink the portion of the heat recoverable tubing around solder tail 954. Terminal 952 will transmit thermal energy therealong to melt sealant preform 966 at connector housing 956 and shrink tubing 964 therearound to seal to housing 958. However there is no conductor wire extending from the solder tail away from the connector 950 and thus is not available to transmit heat therealong from the solder area to the end of the tubing length. When a short length of shapable heater strap 742 is wrapped around end 970 of the tubing length 964 and the entire terminal/sleeve assembly is energized by a coil therearound, the additional heater strap 742 is energized and melts and tackifies the sealant preform 968 in the otherwise empty end 970 of the tubing length 964 and forms a solid mass, and the tubing shrinks therearound, in order to provide an assured method of insulating the otherwise exposed terminal portion. Figure 19 illustrates a cross-section of tubing end 970 of sleeve assembly 960 having sealant preform 968 therewithin, surrounded by heater strap 742 prior to being energized by coil 982 of apparatus 980; the end of solder tail 954 is visible and includes outwardly facing layer 958 of magnetic material.

The construction of heater means may vary as is shown in Figures 5 and 9 through 19 both in general physical shape and in the laminar structure and be useful in carrying out the method of the present invention. Other variations may be made by skilled artisans to the present invention which are within the scope of the claims.

## Claims

1. A method of joining a plurality of associated pairs of first and second conductor means (10,70;604,602;900,902) and simultaneously sealing the joints (30) thus formed, each said first and second conductor means including respective first and second contact sections (14,76;606,608;722,724;802,804;916,918) extending from respective first and second insulated portions (48,74) and exposed to be joined in a termination region (32,632), the method including positioning each said first (14,606,722,802,916) and associated second contact section (76,608,724,804,918) together in paired, and adjacent relationship, placing a preform (54,654,728,808,914) of solder material containing flux therefor at least adjacent each said pair of first and second contact sections (14,76;606,608;722,724;802,804;916,918), and placing a length (52,652,906) of heat recoverable tubing of sufficient diameter around each said solder preform (54,654,914) and said pair of first and second contact sections and extending axially therefrom along at least a portion of said first and second insulated conductor portions (48,74) to first and second tubing ends (60,62;904,910), defining a termination region (32,632,720,800,908), characterised as follows:
a source (114,120,234,312,418,514,610,750,760) is identified for generating a constant amplitude high frequency alternating current of known frequency;
a heater means (100,200,300,400,500,700) is formed including at least one portion (102,202,300,400,500,710) having a length sufficient to extend transversely across a plurality of said termination regions (32,632,720,800,908) and adjacent said first and second contact sections (14,76;606,608;916,918), wherein a heater means is used which is removable and includes at least one first layer (106,212,302,406,504,706) of a first metal having low electrical resistance and minimal magnetic permeability and deposited on at least one major surface thereof a second layer (108,214,304,408,508,702) of a second metal having high electrical resistance and high magnetic permeability, said second layer (108,214,304,408,508,702) having a thickness approximately equal to one skin depth of said second metal, given said known frequency;
said solder material of said solder preform (54,654,914) is selected to have a nominal melting temperature slightly less than the Curie temperature of said second metal of said heater means (100,200,300,400,500,700), and said heat recoverable tubing of said length (52,652,906) is selected to have a nominal shrinking temperature slightly less than the Curie temperature of said second metal of said heater means;
said at least one portion (102,202,300,400,500,710) of said heater means is disposed transversely across said plurality of termination regions and at least adjacent outer surfaces of said lengths (52,652,906) of heat recoverable tubing; and
a constant amplitude high frequency alternating current is generated in said heater means (100,200,300,400,500,700) for a selected length of time,
whereby a current is generated in said heater means generating thermal energy sufficient to achieve and maintain the Curie temperature of said second layer (108,214,304,408,508,702), the thermal energy being transmitted radially inwardly through said heat recoverable tubing lengths to said solder preforms adjacent said first and second contact sections melting said solder preforms and forming assured joints between said first and second contact sections, and the thermal energy shrinking said tubing lengths to conform to the outwardly facing surfaces of said joined first and second contact sections and tightly engaging the first and second insulated conductor portions extending therefrom, sealing the joints after which the heater means (100,200,300,400,500,700) is removed.

2. A method as set forth in claim 1 further characterised in that a heater means is used which comprises a structure (100,200,300,400,500,700) including at least two opposing ones (106,106;212,216;302,302;406,412;504,506;706,706) of said first layers of said first metal at least insulated from each other therebetween and defining a discontinuous electrical loop.

3. A method as set forth in either of claims 1 or 2 further characterised in that a heater means is used which comprises a pair of plate members (500,502) extending respectively transversely above and below said termination regions (32) and adjacent to said at least one tubing length (52).

4. A method as set forth in either of claims 1 or 2 further characterised in that a heater means is used which comprises a strap (100,200,300,600,700) wrapped substantially around said termination regions (32,632,720,800,908) thereby having opposed first and second strap portions (102,104;204,208;708,710) substantially enveloping said termination regions (32,632,720,800,908) adjacent outer surfaces of said at least one length (52,652,906) of heat recoverable tubing, and said first and second portions conclude in exposed conductive free ends (110,112) at least insulated from each other.

5. A method as set forth in claim 4 further characterised in that a strap is used which is a thin and shapable member (700) and is shaped to engage substantial portions of outer surfaces of said at least one tubing length (730,810,906).

6. A method as set forth in any of claims 1 to 5 further characterised in that electrical connections (116,118;230,232;308,310;414,416) are made to conductive exposed free ends of said heater means insulated from each other, from electrodes of a said current source (114,234,312,418,610,750) for transmission of said current to said heater means.

7. A method as set forth in any of claims 1 to 5 further characterised in that said current is induced in said heater means by a coil (122,512,762) of a said current source (120,514,760) surrounding said termination region (32) and said heater means.

8. A method as set forth in any of claims 1 to 7 further characterised in that there are joined first conductive means in form of electrical terminals (10) and second conductive means in form of conductor wires (70).

9. A method as set forth in any of claims 1 to 7 further characterised in that there are joined first and second conductive means in form of conductor wires (602,604;900,902).

10. A method as set forth in any of claims 1 to 9 further characterised in that the termination regions which are used (32,632,720,800) include a plurality of first and second conductive means (10,70;604,602) disposed within respective ones of a plurality of assemblies (50,650,726,806) of tubing lengths (52,652,730,810) containing respective said solder preforms (54,654,728,808) adjacent said first and second contact means (14,76;606,608;722,724;802,804) and further containing respective first and second sealant preforms (56,58) at respective tubing ends (60,62), said respective insulated portions (48,74) of said first and second conductive means (10,70;604,602;900,902) surrounded by one of said sealant preforms.

## Patentansprüche

1. Verfahren zum miteinander Verbinden einer Mehrzahl einander zugeordneter Paare erster und zweiter Leitereinrichtungen (10, 70; 604, 602; 900, 902) sowie zum gleichzeitigen Abdichten der auf diese Weise gebildeten Verbindungsstellen (30), wobei jede erste und zweite Leitereinrichtung einen jeweiligen ersten und zweiten Kontaktabschnitt (14, 76; 606, 608; 722, 724; 802, 804; 916, 918) aufweist, die sich von jeweiligen ersten und zweiten isolierten Bereichen (48, 74) wegerstrecken und zur Verbindung in einem Anschließbereich (32, 632) freiliegen, wobei das Verfahren folgende Schritte beinhaltet: Positionieren jedes ersten (14, 606, 722, 802, 916) und zugehörigen zweiten Kontaktabschnitts (76, 608, 724, 804, 918) zusammen in einer paarweisen und einander benachbarten Anordnung, Plazieren einer Vorform (54, 654, 728, 808, 914) aus Lötmaterial mit einem darin enthaltenen Flußmittel für dieses wenigstens in der Nähe jedes Paares der ersten und zweiten Kontaktabschnitte (14, 76; 606, 608; 722, 724; 802, 804; 916, 918), sowie Plazieren einer Länge (52, 652, 906) aus wärmerückstellbarem Schlauchmaterial ausreichend großen Durchmessers um jede Lötmaterial-Vorform (54, 654, 914) sowie das Paar der ersten und zweiten Kontaktabschnitte herum, wobei es sich axial davon weg entlang wenigstens eines Teils der ersten und der zweiten isolierten Leiterbereiche (48, 74) zu ersten und zweiten Schlauchenden (60, 2; 904, 910) erstreckt, wodurch ein Anschließbereich (32, 632, 720, 800, 908) definiert wird,
**dadurch gekennzeichnet,**
daß eine Quelle (114, 120, 234, 312, 418, 514, 610, 750, 760) zum Erzeugen eines Hochfrequenz-Wechselstroms mit konstanter Amplitude und bekannter Frequenz bestimmt wird;
daß eine Heizeinrichtung (100, 200, 300, 400, 500, 700) gebildet wird, die wenigstens einen Bereich (102, 202, 300, 400, 500, 710) mit einer ausreichenden Länge beinhaltet, daß er sich quer über eine Mehrzahl der Anschließbereiche (32, 632, 720, 800, 908) sowie angrenzend an die ersten und zweiten Kontaktabschnitte (14, 76; 606, 608; 916, 918) erstreckt, wobei eine Heizeinrichtung verwendet wird, die sich entfernen läßt und wenigstens eine erste Schicht (106, 212, 302, 406, 504, 706) aus einem ersten Metall mit niedrigem elektrischen Widerstand und minimaler magnetischer Permeabilität beinhaltet und auf wenigstens einer Hauptfläche derselben eine zweite Schicht (108, 214, 304, 408, 508, 702) aus einem zweiten Metall mit hohem elektrischen Widerstand und hoher magnetischer Permeabilität aufgebracht ist, wobei die zweite Schicht (108, 214, 304, 408, 508, 702) eine Dicke besitzt, die bei der gegebenen bekannten Frequenz in etwa der Dicke einer Eindringtiefe des zweiten Metalls entspricht;
daß das Lötmaterial der Lötmaterial-Vorform (54, 654, 914) derart ausgewählt wird, daß es eine Nenn-Schmelztemperatur besitzt, die gerinfügig geringer ist als die Curietemperatur des zweiten Metalls der Heizeinrichtung (100, 200, 300, 400, 500, 700) und das wärmerückstellbare Schlauchmaterial des Lösungsstücks (52, 652, 906) derart gewählt wird, daß es eine Nenn-Aufschrumpftemperatur besitzt, die geringfügig niedriger ist als die Curietemperatur des zweiten Metalls der Heizeinrichtung;
daß wenigstens ein Bereich (102, 202, 300, 400, 500, 710) der Heizeinrichtung quer über den mehreren Anschließbereichen sowie wenigstens angrenzend an Außenflächen der Längsstücke (52, 652, 906) aus wärmerückstellbarem Schlauchmaterial angeordnet wird; und
daß ein Hochfrequenz-Wechselstrom konstanter Amplitude in der Heizeinrichtung (100, 200, 300, 400, 500, 700) für eine ausgewählte Zeitdauer erzeugt wird, wodurch ein Strom in der Heizeinrichtung erzeugt wird, und dadurch eine ausreichende Wärmeenergie zum Erreichen und Aufrechterhalten den Curietemperatur der zweiten Schicht (108, 214, 304, 308, 508, 702) erzeugt wird, wobei die Wärmeenergie radial nach innen durch die Längsstücke aus wärmerückstellbarem Schlauchmaterial auf den ersten und den zweiten Kontaktabschnitten benachbarten Lötmaterial-Vorformen übertragen wird, wodurch die Lötmaterial-Vorformen geschmolzen werden und sichere Verbindungen zwischen den ersten und den zweiten Kontaktabschnitten gebildet werden, und wobei die Wärmeenergie die Schlauchmaterial-Längsstücke derart aufschrumpft, daß diese den nach außen weisenden Oberflächen der miteinander verbundenen ersten und zweiten Kontaktabschnitte entsprechen und fest an den sich von diesen wegerstreckenden ersten und zweiten isolierten Leiterbereichen angreifen und die Verbindungsstellen dicht umschließen, wonach die Heizeinrichtung (100, 300, 400, 500, 700) entfernt wird.

2. Verfahren nach Anspruch 1,
**weiterhin dadurch gekennzeichnet,** daß eine Heizeinrichtung verwendet wird, die eine Konstruktion (100, 200, 300, 400, 500, 700) mit wenigstens zwei einander gegenüberliegenden (106, 106; 212, 216; 302, 302; 406, 412; 504, 506; 706, 706) ersten Schichten aus dem ersten Metall aufweist, die dazwischen wenigstens voneinander isoliert sind und eine nicht-kontinuierliche elektrische Schleife bilden.

3. Verfahren nach Anspruch 1 oder 2,
**weiterhin dadurch gekennzeichnet**, daß eine Heizeinrichtung verwendet wird, die ein Paar Plattenelemente (500, 502) aufweist, die sich jeweils quer über sowie unter den Anschließbereichen (32) sowie angrenzend an das wenigstens eine Schlauchmaterial-Längsstück (52) erstrecken.

4. Verfahren nach Anspruch 1 oder 2,
**dadurch gekennzeichnet**, daß eine Heizeinrichtung verwendet wird, die ein Band (100, 200, 300, 600, 700) umfaßt, das im wesentlichen um die Anschließbereiche (32, 632, 720, 800, 908) herumgeschlungen wird und dadurch einander gegenüberliegende erste und zweite Bandbereiche (102, 104; 204, 208; 708, 710) aufweist, die die Anschließbereiche (32, 632, 720, 800, 908) angrenzend an die Außenflächen des wenigstens einen Längsstücks (52, 652, 906) aus wärmerückstellbarem Schlauchmaterial im wesentlichen umschließen, und daß die ersten und die zweiten Bereiche in freiliegenden leitfähigen freien Enden (110, 112) enden, die wenigstens voneinander isoliert sind.

5. Verfahren nach Anspruch 4,
**weiterhin dadurch gekennzeichnet,** daß ein Band verwendet wird, bei dem es sich um ein dünnes und formbares Element (700) handelt und das derart geformt wird, daß es an beträchtlichen Bereichen der Außenflächen der wenigstens einen Schlauchlänge (730, 810, 906) angreift.

6. Verfahren nach einem der Ansprüche 1 bis 5,
**weiterhin dadurch gekennzeichnet**, daß elektrische Verbindungen (116, 118; 230, 232; 308, 310; 414, 416) mit leitfähigen freiliegenden freien Enden der Heizeinrichtung, die voneinander isoliert sind, von Elektroden der Stromquelle (114, 234, 312, 418, 610, 750) zur Übertragung des Stroms zu der Heizeinrichtung hergestellt werden.

7. Verfahren nach einem der Ansprüche 1 bis 5,
**weiterhin dadurch gekennzeichnet**, daß der Strom in der Heizeinrichtung durch eine Wicklung (122, 512, 762) der Stromquelle (120, 514, 760) induziert wird, die den Anschließbereich (32) und die Heizeinrichtung umschließt.

8. Verfahren nach einem der Ansprüche 1 bis 7,
**weiterhin dadurch gekennzeichnet**, daß erste leitfähige Einrichtungen in Form von elektrischen Anschlüssen (10) und zweite leitfähige Einrichtungen in Form von Leiterdrähten (70) miteinander verbunden werden.

9. Verfahren nach einem der Ansprüche 1 bis 7,
**weiterhin dadurch gekennzeichnet**, daß erste und zweite leitfähige Einrichtungen in Form von Leiterdrähten (602, 604; 900, 902) miteinander verbunden werden.

10. Verfahren nach einem der Ansprüche 1 bis 9,
**weiterhin dadurch gekennzeichnet**, daß die verwendeten Anschließbereiche (32, 632, 720, 800) eine Mehrzahl erster und zweiter leitfähiger Einrichtungen (10, 70; 604, 602) beinhalten, die in jeweiligen von mehreren Anordnungen (50, 650, 726, 806) von Schlauchmaterial-Längsstücken (52, 652, 730, 810) angeordnet werden, die jeweilige Lötmaterial-Vorformen (54, 654, 728, 808) angrenzend an die ersten und die zweiten Kontakteinrichtungen (14, 76; 606, 608; 722, 724; 802, 804) enthalten und außerdem jeweilige erste und zweite Dichtungsmaterial-Vorformen (56, 58) an den jeweiligen Schlauchmaterialenden (60, 62) enthalten, wobei die isolierten Bereiche (48, 74) der ersten und der zweiten leitfähigen Einrichtungen (10, 70; 604, 602; 900, 902) jeweils von einer Dichtungsmaterial-Vorform umschlossen werden.

## Revendications

1. Procédé pour joindre plusieurs paires associées de premiers et seconds moyens conducteurs (10, 70 604, 602 ; 900, 902) et sceller simultanément les joints (30) ainsi formés, chacun desdits premiers et seconds moyens conducteurs comprenant des première et seconde sections respectives de contact (14, 76 ; 606, 608 ; 722, 724 ; 802, 804 ; 916, 918) s'étendant depuis des première et seconde parties isolées respectives (48, 74) et exposées pour être jointes dans une zone (32, 632) de terminaison, le procédé comprenant le positionnement de chacune desdites première (14, 606, 722, 802, 916) et seconde, associée, (76, 608, 724, 804, 918) sections de contact, ensemble, dans une disposition accouplée par paires et adjacente, la mise en place d'une préforme (54, 654, 728, 808, 914) de matière à souder contenant un flux au moins à proximité immédiate de chaque paire desdites première et seconde sections de contact (14, 76 ; 606, 608 ; 722, 724 ; 802, 804 ; 916, 918), et la mise en place d'une longueur (52, 652, 906) de tube doué de reprise de forme à chaud, d'un diamètre suffisant, autour de chaque préforme de soudure (54, 654, 914) et de ladite paire de première et seconde sections de contact et s'étendant axialement à partir d'elles suivant au moins une portion desdites première et seconde parties (48, 74) de conducteurs isolés jusqu'à des première et seconde extrémités (60, 62 ; 904, 910) de tube, définissant une zone de terminaison (32, 632, 720, 800, 908), caractérisé comme suit :
une source (114, 120, 234, 312, 418, 514, 610, 750, 760) est identifiée pour générer un courant alternatif à haute fréquence, d'amplitude constante et de fréquence connue ;
un moyen chauffant (100, 200, 300, 400, 500, 700) est formé, comprenant au moins une partie (102, 202, 300, 400, 500, 710) ayant une longueur suffisante pour s'étendre transversalement à travers plusieurs desdites zones de terminaison (32, 632, 720, 800, 908) et à proximité immédiate desdites première et seconde sections de contact (14, 76 ; 606, 608 ; 916, 918), un moyen chauffant étant utilisé, lequel est amovible et comprend au moins une première couche (106, 212, 302,406, 504, 706) d'un premier métal ayant une faible résistance électrique et une perméabilité magnétique minimale et, déposée sur au moins l'une de ses surfaces principales, une seconde couche (108, 214, 304, 408, 508, 702) d'un second métal ayant une haute résistance électrique et une haute perméabilité magnétique, ladite seconde couche (108, 214, 304, 508, 702) ayant une épaisseur approximativement égale à une épaisseur de peau dudit second métal, étant donné ladite fréquence connue ;
ladite matière du type soudure de ladite préforme (54, 654, 914) en soudure est choisie pour avoir une température nominale de fusion légèrement inférieure à la température de Curie dudit second métal dudit moyen chauffant (100, 200, 300, 400, 500, 700) et ledit tube doué de reprise de forme à chaud de ladite longueur (52, 652, 906) est choisi pour avoir une température nominale de retrait légèrement inférieure à la température de Curie dudit second métal dudit moyen chauffant ;
ladite, au moins une, partie (102, 202, 300, 400, 500, 710) dudit moyen chauffant est disposée transversalement à travers plusieurs desdites zones de terminaison et au moins adjacente à des surfaces extérieures desdites longueurs (52, 652, 906) de tube doué de reprise de forme à chaud ; et
un courant alternatif à haute fréquence et amplitude constante est généré dans ledit moyen chauffant (100, 200, 300, 400, 500, 700) pendant un intervalle de temps choisi,
grâce à quoi le courant est généré dans ledit moyen chauffant, générant une énergie thermique suffisante pour atteindre et maintenir la température de Curie de ladite seconde couche (108, 214, 304, 408, 508, 702), l'énergie thermique étant transmise radialement vers l'intérieur à travers lesdites longueurs de tube doué de reprise de forme à chaud jusqu'auxdites préformes de soudure à proximité immédiate desdites première et seconde sections de contact, faisant fondre lesdites préformes de soudure et formant des joints assurés entre lesdites première et seconde sections de contact, et l'énergie thermique rétractant lesdites longueurs de tube pour leur faire épouser la forme des surfaces, tournées vers l'extérieur, desdites première et seconde sections de contact jointes et engageant étroitement les première et seconde parties conductrices isolées qui en partent, scellant les joints après quoi le moyen chauffant (100, 200, 300, 400, 500, 700) est enlevé.

2. Procédé selon la revendication 1, caractérisé en outre en ce qu'un moyen chauffant est utilisé, lequel comporte une structure (100, 200, 300, 400, 500, 700) comprenant au moins deux, opposés, (106, 106 ; 212, 216 ; 302, 302 ; 406, 412 ; 504, 506 ; 706, 706) desdites premières couches dudit premier métal, au moins isolées l'une de l'autre, entre elles et définissant une boucle électrique discontinue.

3. Procédé selon l'une des revendications 1 et 2, caractérisé en outre en ce qu'un moyen chauffant est utilisé, lequel comporte une paire d'éléments à plaques (500, 502) s'étendant respectivement transversalement au-dessus et au-dessous desdites zones (32) de terminaison et à proximité immédiate de ladite, au moins une, longueur (52) de tube.

4. Procédé selon l'une des revendications 1 et 2, caractérisé en outre en ce qu'un moyen chauffant est utilisé, lequel comporte une bride (100, 200, 300, 600, 700) enroulée sensiblement autour desdites zones de terminaison (32, 632, 720, 800, 908), de manière que des première et seconde parties opposées (102, 104 ; 204, 208 ; 708, 710) de la bride enveloppent sensiblement lesdites zones de terminaison (32, 632, 720, 800, 908) à proximité immédiate de surfaces extérieures de ladite, au moins une, longueur (52, 652, 906) de tube doué de reprise de forme à chaud, et que lesdites première et seconde parties se terminent par des extrémités libres conductrices exposées (110, 112), au moins isolées l'une de l'autre.

5. Procédé selon la revendication 4, caractérisé en outre en ce qu'une bride est utilisée, laquelle est un élément mince et façonnable (700) et est façonnée pour engager des parties importante de surfaces extérieures de ladite, au moins une, longueur (730, 810, 906) de tube.

6. Procédé selon l'une quelconque des revendications 1 à 5, caractérisé en outre en ce que des connexions électriques (116, 118 ; 230, 232 ; 308, 310 ; 414, 416) sont réalisées sur des extrémités libres exposées et conductrices dudit moyen chauffant, isolées l'une de l'autre, à partir d'électrodes de ladite source de courant (114, 234, 312, 418, 610, 750) pour la transmission dudit courant audit moyen chauffant.

7. Procédé selon l'une quelconque des revendications 1 à 5, caractérisé en outre en ce que ledit courant est induit dans ledit moyen chauffant par une bobine (122, 512, 762) de ladite source de courant (120, 514, 760), entourant ladite zone de terminaison (32) et ledit moyen chauffant.

8. Procédé selon l'une quelconque des revendications 1 à 7, caractérisé en outre en ce que des premiers moyens conducteurs sous la forme de bornes électriques (10) et des seconds moyens conducteurs sous la forme de fils conducteurs (70) sont joints.

9. Procédé selon l'une quelconque des revendications 1 à 7, caractérisé en outre en ce que des premiers et seconds moyens conducteurs sous la forme de fils conducteurs (602, 604 ; 900, 902) sont joints.

10. Procédé selon l'une quelconque des revendications 1 à 9, caractérisé en outre en ce que les zones de terminaison (32, 632, 720, 800) qui sont utilisées comprennent plusieurs premiers et seconds moyens conducteurs (10, 70 ; 604, 602) disposés à l'intérieur de certains, respectifs, de plusieurs ensembles (50, 650, 726, 806) de longueurs (52, 652, 730, 810) de tube contenant lesdites préformes en soudure respectives (54, 654, 728, 808) à proximité immédiate desdits premiers et seconds moyens de contact ((14, 76 ; 606, 608 ; 722, 724 ; 802, 804) et contenant en outre des premières et secondes préformes respectives (56, 58) en matière de scellage à des extrémités respectives (60, 62) de tube, lesdites parties isolées respectives (48, 74) desdits premiers et seconds moyens conducteurs (10, 70 ; 604, 602 ; 900, 902) étant entourées par l'une desdites préformes en matière de scellage.
